Europäisches Patentamt

European Patent Office

Office européen des brevets

(11) Numéro de publication: **0 368 707 B1**

# FASCICULE DE BREVET EUROPEEN

(45) Date de publication de fascicule du brevet: **01.09.93**

(51) Int. Cl.5: **E06B 7/02**, F24F 5/00, F24D 13/00

(21) Numéro de dépôt: **89402885.1**

(22) Date de dépôt: **19.10.89**

(54) **Paroi vitrée chauffante.**

(30) Priorité: **27.10.88 FR 8814009**

(43) Date de publication de la demande:
**16.05.90 Bulletin 90/20**

(45) Mention de la délivrance du brevet:
**01.09.93 Bulletin 93/35**

(84) Etats contractants désignés:
**AT BE CH DE ES FR GB GR IT LI LU NL SE**

(56) Documents cités:
**WO-A-85/02649**
**WO-A-87/01155**
**DE-A- 1 659 222**
**DE-A- 3 009 800**
**GB-A- 2 174 745**

(73) Titulaire: **SAINT GOBAIN VITRAGE INTERNA-TIONAL**
**"Les Miroirs" 18, avenue d'Alsace**
**F-92400 Courbevoie(FR)**

(72) Inventeur: **Fremaux, Jacques**
**1 bis rue Claude Monet**
**F-78380 Bougival(FR)**

(74) Mandataire: **de Toytot, Robert et al**
**SAINT-GOBAIN RECHERCHE 39 quai Lucien**
**Lefranc B.P. 135**
**F-93304 Aubervilliers Cédex (FR)**

EP 0 368 707 B1

## Description

La présente invention concerne une paroi vitrée destinée à séparer un local de l'extérieur dans laquelle un vitrage est chauffé électriquement et où de l'air circule le long du vitrage chauffant avant d'être distribué dans l'atmosphère du local.

Il est connu d'améliorer les performances d'une paroi vitrée séparant un local chauffé de l'ambiance extérieure en doublant cette paroi par une plaque transparente et en faisant circuler entre les deux vitres de l'air, souvent prélevé à l'extérieur et qui est ensuite mélangé à l'atmosphère du local. De nombreux systèmes ont été proposés. Leur avantage réside dans le fait que la déperdition calorifique est diminuée par rapport à celle de la même paroi sans circulation d'air mais avec introduction directe de l'air extérieur.

Néanmoins, avec les parois précédentes, du fait qu'au moins une partie de l'air qui circule le long du vitrage intérieur est prélevé à l'extérieur du bâtiment, la température du vitrage intérieur reste plus basse que celles des cloisons internes du bâtiment qui constituent les autres parois du local. De ce fait, l'utilisation de l'espace au voisinage de la paroi extérieure reste en général limitée. Il serait intéressant de pouvoir élever la température de surface de cette paroi. On a proposé de le faire en isolant davantage celle-ci, par exemple en remplaçant le simple vitrage intérieur par un vitrage isolant. Le confort est ainsi amélioré mais l'air de renouvellement qui longe la paroi s'échauffe moins et le bilan thermique global n'est pas sensiblement améliore.

On a pensé améliorer la situation en utilisant directement les apports calorifiques nécessaires au chauffage du local pour augmenter la température de surface du vitrage qui constitue la face interne de la paroi vitrée séparant le local de l'extérieur. Le brevet européen EP 102 987 B propose ainsi de chauffer l'air de renouvellement avant son passage le long de la paroi. Le système a donné satisfaction mais une partie de l'énergie apportée est utilisée pour réchauffer - inutilement - la paroi extérieure.

On a également proposé une variante du système précédent dans laquelle c'est l'un des vitrages constituant la paroi elle-même qui est chauffant. On utilise en général dans ce cas, une couche conductrice transparente constituée d'un métal en couche mince déposé sous vide. Un tel système présente des avantages évidents puisque l'apport de chaleur se fait là où il est le plus utile, dans le local lui-même et qu'il permet l'intégration dans la paroi vitrée de fonctions complémentaires, non seulement l'éclairage naturel, mais en plus, le renouvellement d'air et le chauffage.

Cependant, la déperdition énergétique n'est pas négligeable : les échanges thermiques entre les deux vitrages constituant la paroi : le vitrage interne chauffant et le vitrage externe à température plus basse, sont importants, et c'est pourquoi, dans le brevet US 4 641 466, on propose que le vitrage opposé au vitrage chauffant soit équipé d'une couche réfléchissant les rayons infra-rouges de manière à renvoyer le rayonnement thermique émis par le vitrage chauffant, en diminuant ainsi la fuite des calories.

La demande de brevet internationale WO 87/01155 propose d'associer la même combinaison, vitrage chauffant vis-à-vis d'une couche réfléchissant le rayonnement infra-rouge, mais associée ici à une double circulation d'air dans les deux espaces d'une fenêtre triple.

On connaît également des dispositifs divers qui permettent une utilisation des vitrages chauffants dans de bonnes conditions de fonctionnement, c'est ainsi par exemple que la demande de brevet européen EP 165 287 propose une régulation de la température et comme le brevet français FR 2 180 433, une coupure automatique de l'alimentation électrique lorsqu'il devient inutile ou dangereux de la maintenir.

Mais ces dernières parois vitrées si elles présentent des solutions techniques intéressantes restent compliquées et par conséquent difficiles à mettre en oeuvre et en général, chères.

On connaît du document WO-A-8701155 une fenêtre du type pariétodynamique, c'est-à-dire avec de l'air circulant entre deux plaques transparentes au moins, avant d'être distribué dans le local. Cette fenêtre est formée par une paroi vitrée destinée à séparer un local de l'extérieur et comportant plusieurs plaques transparentes, la plaque située le plus vers l'intérieur du local appartenant à un vitrage chauffant électriquement, et une autre plaque comportant en surface une couche mince réfléchissant les rayons infra-rouge.

Cette couche mince agissant sur le rayonnement thermique a une identité de nature physique avec une couche à basse émissivité, tout en exerçant une fonction différente.

L'invention se fixe comme objectif de présenter une solution de paroi vitrée chauffante, à circulation d'air, efficace et simple tout en restant bon marché. On a donc cherché une solution qui fournisse le même confort que les systèmes existants mais pour un coût de fonctionnement plus faible et pour un coût à l'installation beaucoup plus réduit.

Pour atteindre ce résultat, selon la revendication 1 la couche mince agissant sur le rayonnement thermique, à basse émissivité, est placée à la surface de ladite plaque du vitrage chauffant, du côté où l'air circule. Le vitrage selon l'invention se distingue ainsi de l'art antérieur notamment par la disposition de la couche mince agissant sur le rayonnement thermique dont la fonction recherchée est celle de la basse émissivité plutôt que celle de réflexion du rayonnement thermique infrarouge.

On utilise de préférence comme élément chauffant dans le vitrage, une couche transparente conductrice. Dans une variante préférée de l'invention, c'est cette couche elle-même qui constitue la couche à basse émissivité. L'invention prévoit que, dans ce cas, si la tension d'alimentation est élevée et que la couche, habituellement hors d'atteinte devient accessible pour une raison quelconque, volontaire ou accidentelle, l'alimentation sera coupée automatiquement.

La réalisation d'une paroi vitrée selon l'invention présente des avantages sensibles par rapport à l'art antérieur : sur le plan technique, lorsque la couche à basse émissivité est dirigée vers le côté froid de la paroi, le rayonnement thermique émis par le vitrage chauffant l'est très majoritairement vers l'intérieur du local ce qui diminue très sensiblement les déperditions puisque la chaleur émise par conduction vers l'extérieur est, quant à elle, récupérée pour l'essentiel grâce à la circulation d'air. Cet avantage technique en entraîne un autre qui concerne le confort, en effet, dans des conditions thermiques données : températures interne et externe, débit d'air, énergie électrique fournie au vitrage chauffant, la température de la paroi sur sa face dirigée vers l'intérieur du local sera plus élevée ce qui améliorera le confort. L'autre manière de présenter les avantages de l'invention est économique : le fait d'utiliser la même couche comme élément chauffant et comme isolant "radiatif" limite le coût de l'investissement de la paroi. De plus, si, au lieu d'avoir une température de paroi plus élevée comme dans l'exemple précédemment présenté, l'on maintient - à l'aide d'une régulation - la même température de surface, l'énergie électrique nécessaire pour maintenir cette température sera sensiblement diminuée.

Ce dernier phénomène peut être facilement mis en lumière en utilisant la notion de résistance thermique. Soit R la résistance thermique globale qui existe entre la surface extérieure du vitrage chauffant interne et le vitrage extérieur. Par définition, les échanges thermiques entre les deux vitrages sont mesurés par le flux F :

$$F = \frac{T_I - T_E}{R}$$

où $T_I$ et $T_E$ sont respectivement les températures intérieure et extérieure sur les parois, de part et d'autre de la lame d'air.

La résistance thermique R est composée de deux parties, l'une concerne le renouvellement d'air et la conduction-convexion de la lame d'air, c'est $R_c$, l'autre le rayonnement thermique, $R_R$. Ces résistances se combinent classiquement par la relation :

$$\frac{1}{R} = \frac{1}{R_c} + \frac{1}{R_R}$$

Le système d'isolation thermique dit "pariéto-dynamique" qui consiste à faire circuler l'air de renouvellement (éventuellement mélangé à de l'air pris dans le local lui-même) entre les deux plaques constituant la paroi extérieure du local a pour effet d'augmenter très sensiblement la valeur de $R_c$.

Supposons que celle-ci a été multipliée par 10 :

$$\frac{1}{R} = \frac{1}{10R_c} + \frac{1}{R_R}$$

On voit qu'alors, si $R_c$ et $R_R$ sont du même ordre, toute modification de $R_R$ se répercutera pratiquement intégralement sur la résistance thermique de l'ensemble et donc sur le flux thermique qui résulte d'un gradient de température donné : si par exemple, on double $R_R$, le flux résultant sera pratiquement divisé par deux : toute action sur le rayonnement émis par la plaque chaude se répercutera immédiatement sur les déperditions thermiques.

Les figures qui seront expliquées dans la suite permettront de mieux comprendre comment est réalisée l'invention et son fonctionnement.

La figure 1 représente une fenêtre à isolation pariéto-dynamique classique.

La figure 2 est un schéma d'une telle fenêtre.

La figure 3 est une variante chauffante.

La figure 4 représente l'énergie émise respectivement par un verre nu et par un verre revêtu d'une couche à basse émissivité.

Les figures 5, 6 et 7 schématisent des parois conformes à l'invention.

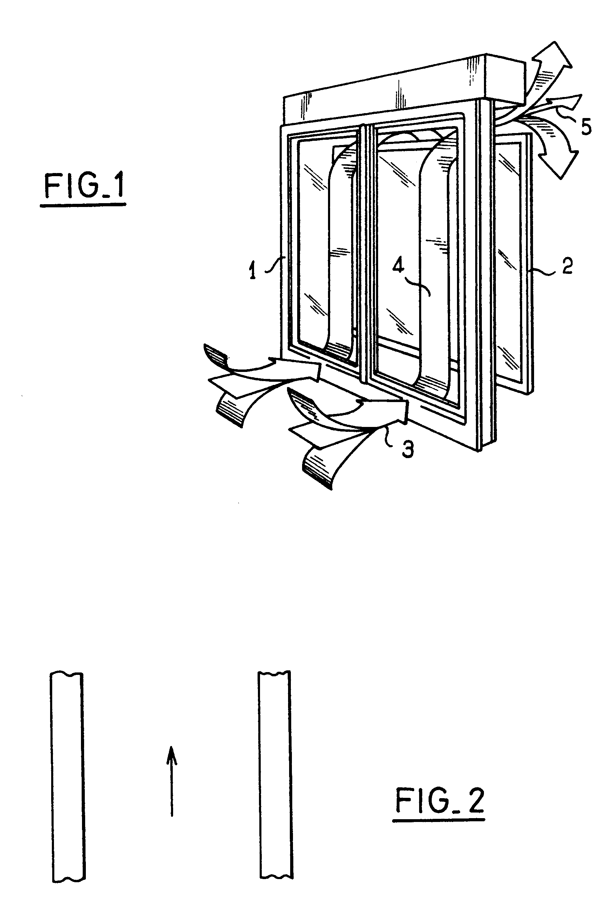

Sur la figure 1, on voit une fenêtre à isolation pariéto-dynamique : un châssis extérieur 1 est doublé d'un châssis intérieur 2. Ces châssis sont reliés de manière étanche à la paroi à l'exception d'ouvertures basses pour le vantail extérieur et d'ouvertures hautes pour le vantail intérieur. Un système de ventilation mécanique contrôlée maintient l'atmosphère interne du local en dépression de manière à aspirer un flux d'air extérieur qui assurera le renouvellement de l'air du local, le débit est par exemple d'un volume égal à celui du local par heure. Les filets d'air extérieur sont figurés en 3, l'air circule en 4 entre les vantaux puis pénétre en 5 dans le local. Des systèmes différents ont été également proposés, en particulier le nombre de parois verticales peut être différent, le sens de circulation de l'air également ainsi que la proportion d'air recyclé. Mais le principe reste que de l'air frais prélevé à l'extérieur circule le long d'une paroi jouxtant l'espace intérieur du local.

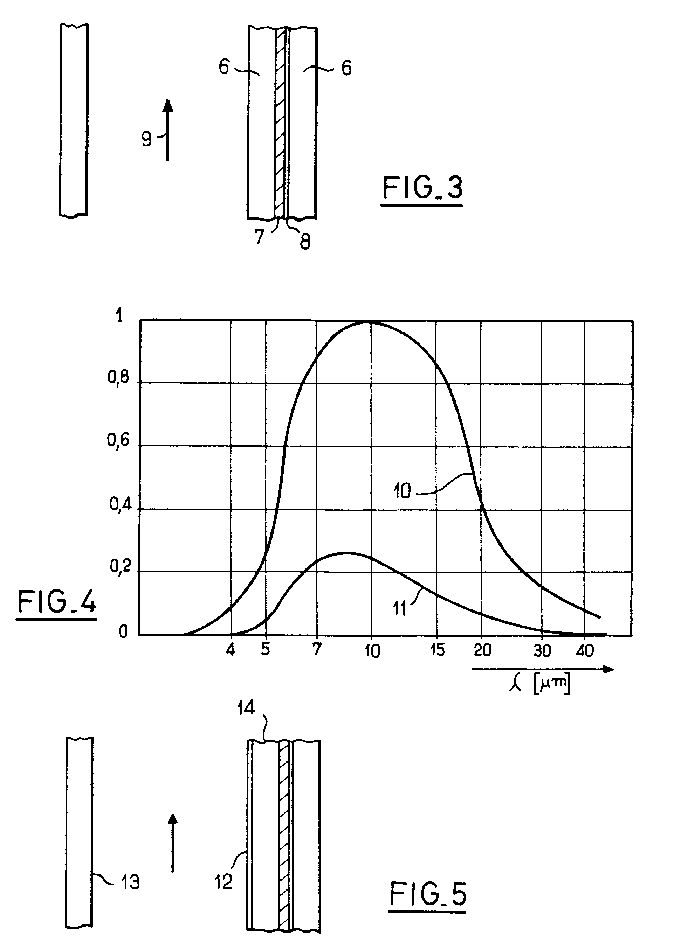

La figure 2 symbolise le système le plus simple : de l'air circule de bas en haut entre deux vitrages constitués chacun d'une simple vitre.

Sur la figure 3 c'est le même système mais équipé d'un vitrage chauffant qu'on a représenté. Du côté de la paroi dirigé vers l'intérieur, on a placé un vitrage feuilleté constitué de deux feuilles de verre externes séparées par une feuille plastique intermédiaire 7, par exemple en butyral de polyvinyle (PVB). L'un des verres 6 est équipé sur sa face en contact avec le PVB d'une couche transparente conductrice 8 qui est par exemple constituée d'argent déposé par pulvérisation cathodique et placé entre deux couches d'un oxyde transparent comme l'oxyde d'étain qui protège l'argent et accroît la transmission lumineuse. Le courant est amené de manière classique par des électrodes en forme de bande constituées par exemple d'une peinture à l'argent. Pour éviter la casse qu'entraînerait les contraintes thermiques dans tous les verres d'une paroi analogue à celle de la figure 3 et des figures suivantes, il est préférable de les prévoir en verre trempé.

Lorsqu'un tel vitrage chauffant est utilisé dans une cloison à isolation pariéto-dynamique, on utilise aussi des systèmes de régulation du type de ceux décrits par exemple dans la demande de brevet européen EP 165 287.

Ce sont des parois chauffantes du type de celle de la figure 3 que l'on équipe selon l'invention, d'une couche à faible émissivité pour en améliorer l'efficacité. Ces couches, étant donné le rôle qu'on leur fait jouer, doivent être dirigées vers l'extérieur, soit du côté du courant d'air de renouvellement (symbolisé par la flèche 9 sur la figure 3), soit de l'autre côté. Dans tous les cas, il est nécessaire de pouvoir maintenir cette couche propre. Elle doit donc être suffisamment résistante mécaniquement pour pouvoir subir les opérations d'entretien usuelles. Les couches métalliques du type de la couche 8 décrite ci-dessus ne conviennent en général pas et il convient plutôt d'utiliser des couches d'un oxyde semi-conducteur déposées à chaud comme par exemple celles qui sont décrites dans le brevet EP 125 153. Ces couches ont la propriété de diminuer sensiblement l'émission de rayonnement thermique du verre qui en est équipé.

Sur la figure 4, on a représenté le spectre du rayonnement émis à une température de 20°C par la surface d'un verre silico-sodo-calcique non-traité en 10 et par la surface du même verre à la même température mais équipé d'une couche $SnO_2$ dopé au fluor d'une épaisseur de 420 nm en 11. On voit que l'énergie émise par le second est beaucoup moins importante que celle émise par le premier.

La figure 5 représente le même système pariétodynamique que celui de la figure 3 mais équipé selon l'invention d'une couche qui limite l'émission de rayonnements thermiques tels en particulier que ceux qui seraient susceptibles d'être absorbés par le verre froid 13 situé en face du vitrage chauffant 14.

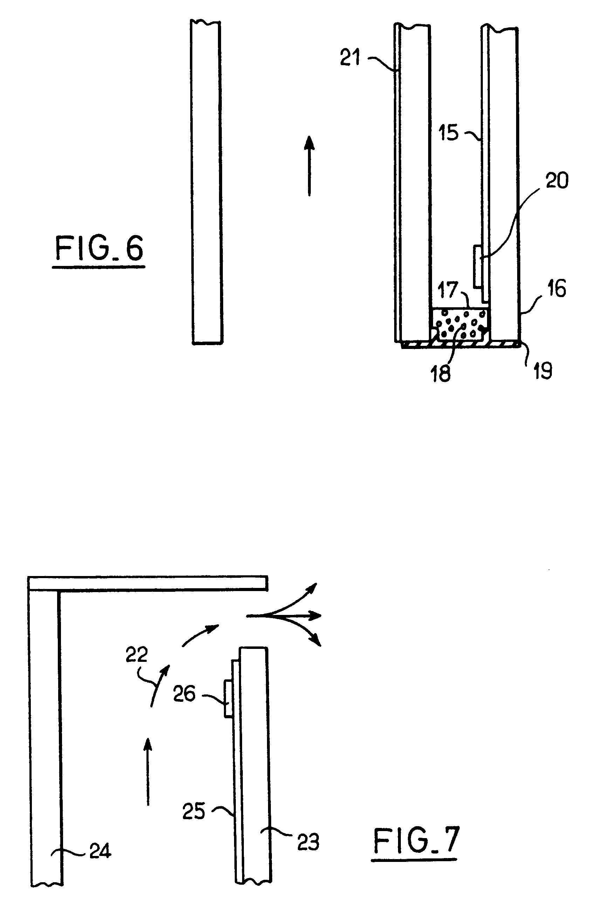

Sur la figure 6, on a représenté une paroi à isolation pariétodynamique équipée de son vitrage chauffant selon l'invention mais ici, dans une version à vitrage isolant scellé.

La couche chauffante 15 est protégée des contacts extérieurs car elle se trouve à l'intérieur d'un vitrage isolant scellé traditionnel 16 constitué de la manière habituelle d'un espaceur 17 rempli de desséchant 18 et collé aux verres constituant le double vitrage par un élastomère par exemple en polysulfure 19. Le courant électrique est amené par deux bandes conductrices du type de celle représentée en 20. Si la couche chauffante 15 n'est pas la couche à basse émissivité, ce sera la couche à faible émissivité 21 qui est située à l'extérieur de l'autre plaque constituant le vitrage isolant qui jouera ce rôle, mais elle pourrait aussi bien se trouver sur le verre chauffant lui-même, du côté opposé à la couche 15.

La figure 7 représente schématiquement une variante préférée de l'invention. On y voit une paroi constituée de deux plaques entre lesquelles circule un courant d'air frais représenté par des flèches 22. L'une des plaques 23 est chauffante et, ici, dirigée vers l'intérieur du local. La plaque froide 24 est dirigée, elle, ici vers l'extérieur. L'air est aspiré de l'extérieur, de préférence, en partie basse de la plaque 24 mais tout autre système de circulation d'air dans lequel l'air frais circule le long de la plaque chaude conviendrait également.

La plaque chauffante 23 est équipée du côté opposé au local, d'une couche 25 susceptible de résister sans dégradation aux opérations de nettoyage. Cette couche, à faible émissivité, analogue à la couche 12 de la figure 5 ou à la couche 21 de la figure 6, joue ici, en plus, le rôle de couche chauffante. On l'a donc équipé de bandes d'amenée de courant 26, espacées de manière telle qu'en les reliant à la source de tension électrique disponible, on puisse disposer de la puissance surfacique maximum souhaitée. En effet, pour des raisons économiques, plutôt que d'adapter la couche aux dimensions de la plaque et à la tension électrique disponible, on préfère en général utiliser toujours la même couche, et adapter les paramètres électriques, tension et/ou durée des impulsions pour atteindre la puissance surfacique que la régulation prévoit en fonction des besoins, à savoir, température de surface de la paroi chaude et/ou température de l'air entrant et/ou puissance électrique globale nécessaire à un instant donné en fonction des contraintes comme par exemple, valeur de consigne de la température du local, valeur actuelle de cette température, température extérieure, heure de la journée, etc...

Pour pouvoir élargir au maximum le domaine d'utilisation possible, on souhaite pouvoir utiliser les tensions électriques les plus élevées, en particulier celle du réseau de distribution publique d'électricité domestique. Ceci oblige à disposer de conditions de pose adaptées qui utilisent des mastics isolants et évitent tout contact de la couche avec des éléments conducteurs de l'électricité et à prévoir des systèmes de sécurité convenables. En effet, la couche 25 a besoin de subir périodiquement un entretien car le passage de l'air peut la salir. Il faut donc que la paroi puisse s'ouvrir pour permettre un tel nettoyage. Il faut dans ces conditions que, si la tension utilisée habituellement est dangereuse, l'alimentation électrique soit coupée automatiquement lors de l'ouverture du panneau. Un système analogue à celui du brevet FR 2 180 433 convient. De même il faut éviter qu'en cas de casse de l'un des verres 23 ou 24, l'alimentation électrique soit maintenue.

Comme dans le cas général, les verres sont trempés, on pourra utiliser des systèmes de détection de la casse du verre trempé habituel comme par exemple celui décrit dans la demande de brevet européen EP 33 857. Pour le verre 24, il suffit de vérifier grâce à une électronique de conception connue que le passage du courant n'est pas interrompu.

On voit ainsi, à l'issue de la description qui précède, que l'invention propose une paroi efficace, économique dans sa consommation d'énergie et bon marché dans l'investissement. En effet, on peut grâce à elle, utiliser des couches fabriquées en grande série et donc bon marché, n'utiliser qu'une seule couche et, grâce à un système de régulation adapté, fonctionner en utilisant la tension du secteur.

**Revendications**

**1.** Paroi vitrée destinée à séparer un local de l'extérieur et comportant plusieurs plaques transparentes, dont l'une au moins comporte en surface une couche mince agissant sur le rayonnement thermique qui est une couche à basse émissivité, de l'air circulant entre deux plaques transparentes au moins, avant d'être distribué dans le local, et parmi ces dernières plaques transparentes, la plaque située le plus vers l'intérieur du local (14,23) appartient à un vitrage chauffant électriquement, caractérisée en ce que la couche mince (12,21,25), agissant sur le rayonnement thermique, à basse émissivité, est placée à la surface de ladite plaque du vitrage chauffant, du côté où l'air circule.

**2.** Paroi vitrée selon la revendication 1, caractérisée en ce que le vitrage chauffant est un vitrage feuilleté (14).

**3.** Paroi vitrée selon la revendication 1, caractérisée en ce que le vitrage chauffant est un vitrage isolant scellé (16).

**4.** Paroi vitrée selon la revendication 1, caractérisée en ce que le vitrage chauffant est constitué d'une plaque (23) chauffée électriquement par circulation de courant électrique dans une couche conductrice transparente (25) qui est en même temps la couche mince agissant sur le rayonnement thermique.

**5.** Paroi vitrée selon l'une des revendications précédentes, **caractérisée en ce que** la couche mince agissant sur le rayonnement thermique et placée à la surface de la plaque du vitrage chauffant est une couche d'un oxyde métallique transparent semi-conducteur.

**6.** Paroi vitrée selon la revendication 4 et 5, **caractérisée en ce que** la couche est protégée des contacts extérieurs dans les conditions d'usage habituel.

**7.** Paroi vitrée selon l'une quelconque des revendications précédentes, **caractérisée en ce qu'**elle constitue une paroi fixe d'une façade d'un bâtiment.

**8.** Paroi vitrée selon l'une quelconque des revendications 1 à 6, **caractérisée en ce qu'**elle constitue une paroi ouvrante, porte, fenêtre ou équivalent de la façade d'un bâtiment.

**9.** Paroi vitrée selon la revendication 7 ou 8, **caractérisée en ce que** lorsque la couche conductrice (8, 15, 25) protégée des contacts extérieurs dans les conditions d'usage habituel devient accessible, l'alimentation électrique soit coupée automatiquement par un système adapté.

**10.** Paroi vitrée selon la revendication 9, **caractérisée en ce que** le système adapté coupe l'alimentation électrique lors de l'ouverture de la paroi.

**11.** Paroi vitrée selon la revendication 9, **caractérisée en ce que** le système adapté coupe l'alimentation électrique lors de la casse de l'une quelconque des plaques constituant la paroi.

## Claims

**1.** Glazed wall, intended for separating a room from the outdoors and comprising a plurality of transparent plates, of which at least one has at its surface a thin coating acting upon thermal radiation which is a low-emissivity coating, air circulating between at least two transparent plates before being distributed into the room, and of which that transparent plate which is nearest to the interior of the room (14, 23) forms part of an electrically heating pane, characterized in that the thin coating (12, 21, 25) acting on the thermal radiation, the low emissivity coating, is situated at the surface of said plate of the heating pane on the side where the air flows.

**2.** Glazed wall according to Claim 1, characterized in that the heating pane is a laminated pane (14).

**3.** Glazed wall according to Claim 1, characterized in that the heating pane is a sealed insulating pane (16).

**4.** Glazed wall according to Claim 1, characterized in that the heating pane is constituted of a plate (23) electrically heated by flow of electric current through a transparent conducting coating (25) which at the same time is the thin coating acting upon the thermal radiation.

**5.** Glazed wall according to one of the preceding Claims, characterized in that the thin coating acting on the thermal radiation and situated on the surface of the plate of the heating pane is a coating of semiconducting, transparent metal oxide.

**6.** Glazed wall according to Claims 4 and 5, characterized in that the coating is protected from external contacts in normal use conditions.

**7.** Glazed wall according to any one of the preceding Claims, characterized in that it constitutes a fixed wall portion of an outer wall of a building.

**8.** Glazed wall according to any one of Claims 1 to 6, characterized in that it constitutes an opening wall portion, door, window or equivalent of the outer wall of a building.

**9.** Glazed wall according to Claim 7 or 8, characterized in that, when the conducting film (8, 15, 25) protected from external contacts in conditions of normal use becomes accessible, the electrical supply is automatically cut off by an appropriate system.

**10.** Glazed wall according to Claim 9, characterized in that the appropriate system cuts off the electrical supply during the opening of the wall.

**11.** Glazed wall according to Claim 9, characterized in that the appropriate system cuts off the electrical supply if any one of the plates making up the wall is broken.

## Patentansprüche

**1.** Glaswand zur Trennung eines Raumes gegenüber dem Äußeren, die mehrere durchsichtige Platten aufweist, von denen mindestens eine an der Oberfläche eine dünne, auf Wärmestrahlung ansprechende Schicht mit geringem Emissionsgrad aufweist, wobei zwischen mindestens zwei durchsichtigen Platten Luft zirkuliert, bevor sie im Raum verteilt wird, und von diesen letzteren durchsichtigen Platten die am weitesten innen im Raum (14,23) liegende Platte zu einer elektrischen Heizverglasung gehört,
**dadurch gekennzeichnet, daß**
die auf die Wärmestrahlung ansprechende dünne Schicht (12,21,25) mit niedrigem Emissionsgrad an der Oberfläche der Platte der Heizverglasung auf der Seite angeordnet ist, wo die Luft zirkuliert.

**2.** Glaswand nach Anspruch 1, **dadurch gekennzeichnet, daß** die Heizverglasung ein Verbundglas (14) ist.

**3.** Glaswand nach Anspruch 1, **dadurch gekennzeichnet, daß** die Heizverglasung eine dicht verschlossene Isolierverglasung (16) ist.

**4.** Glaswand nach Anspruch 1, **dadurch gekennzeichnet, daß** die Heizverglasung von einer Platte (23) gebildet ist, die durch Durchfluß von elektrischem Strom in einer durchsichtigen leitenden Schicht (25) elektrisch beheizt wird, wobei diese Schicht gleichzeitig die auf die Wärmestrahlung wirkende dünne Schicht ist.

5. Glaswand nach einem der vorhergehenden Ansprüche, **dadurch gekennzeichnet, daß** die auf die Wärmestrahlung wirkende und an der Oberfläche der Platte der Heizverglasung angeordnete dünne Schicht eine Schicht aus einem durchsichtigen Halbleiter-Metalloxid ist.

6. Glaswand nach den Ansprüchen 4 und 5, **dadurch gekennzeichnet, daß** die Schicht bei normalen Benutzungsbedingungen gegen Kontakte von außen geschützt ist.

7. Glaswand nach einem der vorhergehenden Ansprüche, **dadurch gekennzeichnet, daß** sie eine feste Wand einer Gebäudefassade bildet.

8. Glaswand nach einem der Ansprüche 1 bis 6, **dadurch gekennzeichnet, daß** sie eine zu öffnende Wand, eine Tür, ein Fenster oder Ähnliches einer Gebäudefassade bildet.

9. Glaswand nach Anspruch 7 oder 8, **dadurch gekennzeichnet, daß,** wenn die bei normalen Benutzungsbedingungen gegen äußere Kontakte geschützte leitende Schicht (8,15,25) zugänglich wird, die Stromzufuhr durch ein geeignetes System automatisch unterbrochen wird.

10. Glaswand nach Anspruch 9, **dadurch gekennzeichnet, daß** das geeignete System die Stromzufuhr bei Öffnung der Wand unterbricht.

11. Glaswand nach Anspruch 9, **dadurch gekennzeichnet, daß** das geeignete System die Stromzufuhr bei Bruch einer der die Wand bildenden Platten unterbricht.

FIG_1

1    4    2

3

FIG_2

FIG.3

FIG.4

FIG.5

FIG. 6

FIG. 7

10